Europäisches Patentamt

European Patent Office

Office européen des brevets

(11) Numéro de publication: **0 300 894**

**A1**

## (12) DEMANDE DE BREVET EUROPEEN

(21) Numéro de dépôt: **88401865.6**

(22) Date de dépôt: **19.07.88**

(51) Int. Cl.⁴: **G 01 N 35/00**
G 01 N 21/25, G 01 N 33/80

(30) Priorité: **23.07.87 FR 8710491**

(43) Date de publication de la demande:
**25.01.89 Bulletin 89/04**

(84) Etats contractants désignés:
**AT BE CH DE ES GB GR IT LI LU NL SE**

(71) Demandeur: **SOCIETE A.B.X.**
**52/53, rue Kléber**
**F-92300 Levallois (FR)**

(72) Inventeur: **Escal, Philippe**
**17, rue Félicien David**
**F-78100 Saint-Germain-en-Laye (FR)**

(74) Mandataire: **Plaçais, Jean-Yves et al**
**Cabinet Netter 40, rue Vignon**
**F-75009 Paris (FR)**

(54) Dispositif pour la détermination du groupe sanguin d'un échantillon.

(57) Dispositif pour la détermination du groupe sanguin d'un échantillon, comprenant au moins une cellule de mesure (10) propre à recueillir une fraction de l'échantillon et une fraction d'un sérum réactif, une source à ultrasons (24) étant prévue sur la cellule de mesure pour permettre l'agitation de la cellule et faciliter ainsi une éventuelle réaction d'agglutination entre l'échantillon et le sérum réactif.

FIG.1

EP 0 300 894 A1

## Description

### Dispositif pour la détermination du groupe sanguin d'un échantillon

L'invention concerne un dispositif pour la détermination du groupe sanguin d'un échantillon.

Le principe de base appliqué dans les différents dispositifs de détermination des groupes sanguins repose sur la mise en évidence du caractère positif ou négatif de réactions d'agglutination des hématies ou globules rouges du sang à analyser, sous l'action de différents sérums réactifs.

Cette agglutination se manifeste par un rassemblement ou collage des hématies entre elles par l'intermédiaire de macromolécules appelées anticorps. Les anticorps présents dans le sérum réactif s'associent à d'autres macromolécules qui leur sont spécifiques et qui sont appelées antigènes, ces derniers étant inclus dans la paroi externe des hématies. C'est donc cette association anticorps-antigènes qui réalise l'agglutination.

Dans le cas où les hématies de l'échantillon ont des sites antigéniques ou des antigènes spécifiques de l'anticorps contenu dans le sérum réactif, alors la réaction d'agglutination est positive.

Dans le cas contraire, c'est-à-dire lorsque les sites antigéniques ou les antigènes des hématies ne sont pas spécifiques de l'anticorps du sérum réactif, alors la réaction d'agglutination est négative.

Conformément à la technique classique de détermination des groupes sanguins, on dépose, sur une lame de verre, une goutte du sang à analyser et on y ajoute une goutte d'un des sérums réactifs. Ensuite, on agite la lame de verre et on interprète visuellement la réaction d'agglutination pour déterminer si celle-ci est positive ou négative.

L'agitation de la lame de verre est nécessaire pour pouvoir observer la réaction d'agglutination, de la façon la plus nette possible.

Cependant, la viscosité du sang peut conduire à une interprétation erronée dans le cas où la réaction n'est pas franche, par exemple lorsque le patient a subi une ou plusieurs transfusions.

On connaît également des dispositifs automatisés qui permettent de déterminer les groupes sanguins et qui font appel aux principes de base mentionnés ci-dessus. Ces dispositifs comprennent au moins une cellule de mesure propre à recueillir une fraction de l'échantillon sanguin et une fraction d'un sérum réactif, des moyens d'agitation de la cellule pour faciliter une éventuelle réaction d'agglutination entre l'échantillon et le sérum réactif, et des moyens de détection de cette réaction d'agglutination.

Ces dispositifs automatisés présentent les mêmes inconvénients que ceux mentionnés ci-dessus. Au surplus, ils nécessitent un ensemble de moyens mécaniques complexes pour effectuer l'agitation des cellules de mesure qui servent de support à l'échantillon et aux différents sérums réactifs.

En outre, ces dispositifs automatisés ne permettent pas de s'affranchir des difficultés d'interprétation de la réaction d'agglutination.

C'est, en conséquence, l'un des buts de l'invention de procurer un dispositif de détermination du groupe sanguin d'un échantillon, qui ne présente pas les inconvénients mentionnés ci-dessus.

C'est, en particulier, un but de l'invention de procurer un tel dispositif de détermination, dans lequel les moyens propres à réaliser l'agitation sont particulièrement simples et peu encombrants, tout en étant efficaces pour faciliter la netteté de la réaction d'agglutination.

C'est un autre but de l'invention de procurer un tel dispositif qui peut être automatisé pour réaliser les différents tests d'agglutination, sans intervention manuelle.

L'invention concerne plus particulièrement un dispositif pour la détermination du groupe sanguin d'un échantillon, du type comprenant au moins une cellule de mesure propre à recueillir une fraction de l'échantillon et une fraction d'un sérum réactif, des moyens d'agitation de la cellule pour faciliter une éventuelle réaction d'agglutination entre l'échantillon et le sérum réactif, et des moyens de détection de cette réaction d'agglutination.

Conformément à une caractéristique essentielle de l'invention, les moyens d'agitation comprennent une source à ultrasons fixée sur la cellule de mesure.

De préférence, cette source à ultrasons est à basse fréquence, de préférence de 10 à 100 kHz, en particulier de 50 kHz environ.

Grâce à l'utilisation de cette source à ultrasons, on transmet à la cellule de mesure un mouvement vibratoire de faible amplitude et de basse fréquence qui induit un mouvement aléatoire des hématies au sein même de l'échantillon. Ainsi, les sites antigéniques présents à la surface des hématies ont une très forte probabilité de pouvoir se lier aux anticorps présents dans le sérum réactif, ce qui accroît le potentiel de la réaction d'agglutination, si celle-ci est positive.

Du fait que la réaction d'agglutination est ainsi rendue plus fiable, on peut réaliser la détermination du groupe sanguin sur des échantillons de sang dilués, ce qui présente le triple avantage suivant.

En premier lieu, ceci permet de diminuer la quantité de sérum réactif nécessaire à la réaction et par conséquent de diminuer le coût de chaque test.

En second lieu, l'interprétation de la réaction d'agglutination est plus simple du fait de la plus grande transparence globale de l'échantillon. Il devient possible, au sein d'un même échantillon, de distinguer une population d'hématies à réactions positives d'une population d'hématies à réactions négatives. Ce phénomène se produit notamment dans le cas de patients polytransfusés dont le sang peut contenir différents types d'hématies du point de vue antigénique. Avec les dispositifs de détermination classiques, ce phénomène peut être masqué visuellement en fonction du pourcentage de l'une ou l'autre population.

En troisième lieu, compte tenu de la simplicité des moyens d'agitation du dispositif, la conception du dispositif, tant du point de vue mécanique qu'électronique, est considérablement simplifiée.

Dans une forme de réalisation préférée de l'invention, la cellule de mesure ménage une cavité interne et comporte une double entrée, à savoir une première entrée pour emplir cette cavité avec l'échantillon et éventuellement un diluant, et une deuxième entrée pour remplir cette cavité avec le sérum réactif, ainsi qu'une sortie pour évacuer le contenu de la cavité.

Avantageusement, le dispositif comprend un organe support monté en rotation autour d'un axe et supportant une pluralité de cellules de mesure ainsi qu'un nombre correspondant de flacons dont chacun contient un sérum réactif différent et est associé à l'une des cellules de mesure, l'organe support étant propre à faire défiler les cellules de mesure une par une devant les moyens de détection.

On peut ainsi réaliser un dispositif automatisé grâce auquel l'échantillon dilué est réparti dans les différentes cellules de mesure de l'organe support rotatif et dans lequel les différentes fractions de l'échantillon sont soumises à un test d'agglutination avec un réactif différent dans chacune des cellules de mesure.

Avantageusement, l'une des entrées de chaque cellule est reliée, par l'intermédiaire d'une conduite et d'une électrovanne, au flacon de sérum réactif correspondant, tandis que les autres entrées des cellules sont reliées par une conduite commune à un bac de dilution propre à recueillir l'échantillon et un diluant, les sorties respectives des cellules étant reliées par une conduite commune à une chambre à déchets reliée à une source de dépression.

Selon une autre caractéristique de l'invention, le dispositif comprend une aiguille de prélèvement à déplacements verticaux et horizontaux, propre à aspirer un échantillon sanguin dans un réceptacle approprié, par exemple dans un tube à essai, et à refouler ensuite cet échantillon dans le bac de dilution.

Selon une autre caractéristique de l'invention, l'aiguille de prélèvement est déplaçable verticalement, sous l'action d'un vérin, par rapport à un bloc porte-aiguille entre une position basse et une position haute, le bloc porte-aiguille est déplaçable horizontalement, sous l'action d'un autre vérin, entre une position de prélèvement où l'aiguille est amenée au-dessus du réceptacle contenant l'échantillon et descendue en position basse pour aspirer l'échantillon et une position de refoulement où l'aiguille est amenée au-dessus du bac de dilution pour évacuer l'échantillon dans ce bac.

Dans la description qui suit, faite seulement à titre d'exemple, on se réfère aux dessins annexés, sur lesquels :

    - la figure 1 est une vue en perspective d'une cellule de mesure et des moyens de détection d'un dispositif automatisé conforme à l'invention;

    - la figure 2 est une vue en perspective du support rotatif du dispositif;

    - la figure 3 est une vue en coupe transversale du support rotatif de la figure 2, faisant apparaître également les flacons de sérum réactifs et les moyens de détection du dispositif;

    - la figure 4 est une représentation schématique simplifiée de l'ensemble du dispositif automatisé;

    - la figure 5 est une représentation schématique des moyens de commande du déplacement de l'aiguille de prélèvement;

    - la figure 6 est une représentation schématique de l'aiguille de prélèvement et de la seringue de prélèvement qui lui est associée, dans la phase d'aspiration de l'échantillon;

    - la figure 7 représente les moyens de rinçage prévus dans le porte-aiguille;

    - la figure 8 représente une partie du dispositif automatisé, dans la phase de dilution de l'échantillon prélevé antérieurement;

    - la figure 9 représente le circuit de mise au point des moyens de détection;

    - la figure 10 est un schéma de la partie électronique du dispositif; et

    - la figure 11 représente l'organigramme de fonctionnement du dispositif automatisé.

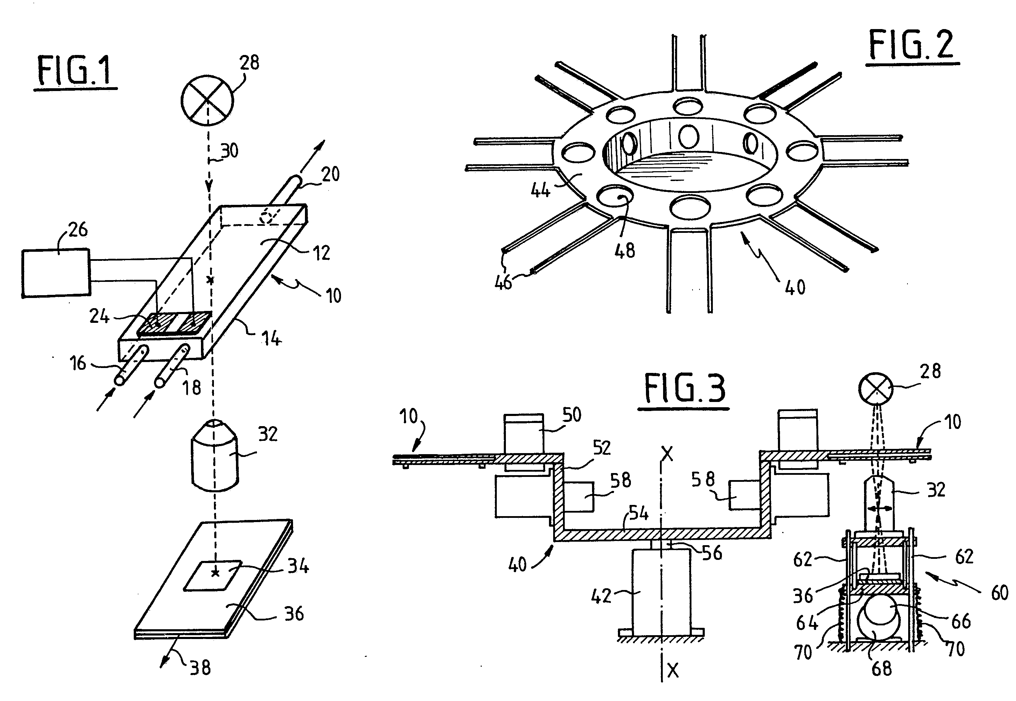

La cellule de mesure 10 représentée sur la figure 1 est formée d'un verre transparent et présente une forme générale parallélépipédique limitée notamment par deux grandes faces parallèles 12 et 14. Cette cellule est creuse et ménage ainsi une cavité interne, également de forme générale parallélépipédique, qui communique avec deux embouts d'entrée 16 et 18 et un embout de sortie 20.

L'embout 16 permet de remplir la cavité interne de la cellule avec une fraction d'un échantillon sanguin qui est de préférence dilué, tandis que l'embout d'entrée 18 permet de remplir cette cavité avec un sérum réactif utilisé classiquement pour la détermination des groupes sanguins. L'embout de sortie 20 permet d'évacuer le contenu de la cavité, par exemple par aspiration au moyen d'une source de vide.

Sur la grande face 12, ou face supérieure de la cellule, est fixée, par exemple par collage, une source à ultrasons 24 qui est connectée à une alimentation électrique 26. Cette source à ultrasons peut être constituée, par exemple, par une source du commerce, telle que celle disponible sous la référence RTC PXE5A. A titre d'exemple, on peut appliquer à une telle source un signal fourni par un oscillateur dont la bande passante se situe aux alentours de 50 kHz.

Après introduction d'une fraction d'un échantillon sanguin, de préférence dilué, et d'un sérum réactif dans la cavité interne de la cellule 10, on applique un signal à la source à ultrasons, en accroissant, comme déjà indiqué plus haut, le potentiel de la réaction d'agglutination si celle-ci est positive.

L'interprétation du caractère positif ou négatif de la réaction d'agglutination est effectuée par des moyens de détection comprenant une source lumineuse 28 propre à envoyer un rayon lumineux 30 à travers la cellule 10. Ce rayon traverse d'abord la grande face 12 pour pénétrer à l'intérieur de la cellule et quitte ensuite celle-ci en traversant l'autre grande face 14. Le rayon lumineux transmis par la cellule est recueilli par un objectif 32 propre à former, sur une surface photosensible 34, une image représentative de la réaction d'agglutination.

Dans l'exemple, la surface photosensible 34 fait partie d'un circuit intégré photosensible 36 propre à émettre des signaux de sortie 38 représentatifs du caractère positif ou négatif de la réaction d'agglutination produite à l'intérieur de la cellule 10.

Les signaux électriques 38 servent à faire une discrimination entre une réaction positive et une réaction négative, grâce à l'image de l'échantillon qui est formée par l'objectif 32 sur la surface photosensible 34, et cela dans un rapport de grossissement adéquat.

A titre d'exemple, le circuit intégré photosensible 36 peut être du type RTC NXA 1011 ou équivalent.

Le dispositif automatisé de l'invention comprend un support rotatif 40 (figures 2 et 3) propre à être entraîné en rotation autour d'un axe X-X de préférence dirigé verticalement, au moyen d'un moteur électrique 42. L'organe support 40 comprend un élément 44 en forme de couronne dont dépendent huit fourches radiales 46 réparties équi-angulairement autour de l'élément 44. Chacune des fourches 46 est composée de deux bras parallèles et est propre à maintenir une cellule de mesure 10 telle que définie précédemment. L'élément 44 comprend en outre, en regard de chacune des fourches 46, un orifice correspondant 48 destiné à loger un flacon 50, chacun de ces flacons contenant un sérum réactif différent et étant associé à l'une des cellules de mesure 10. L'organe support 40 est propre à faire défiler les huit cellules de mesure une par une devant les moyens de détection décrits précédemment.

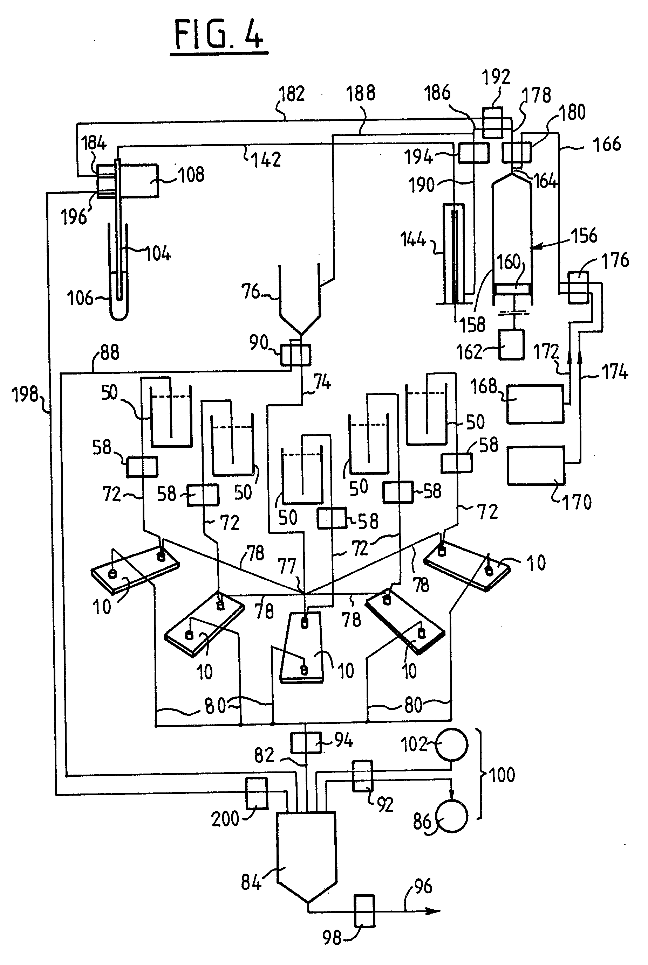

L'élément 44 en forme de couronne est relié, par son bord circulaire interne, à une paroi cylindrique 52 qui se rattache à une paroi de fond circulaire 54 fixée, en son centre, à l'axe 56 du moteur 42. La paroi 52 sert de support à huit électrovannes 58 qui coopèrent chacune avec un flacon 50 et une cellule 10, comme cela sera explicité plus loin en référence à la figure 4.

L'objectif 32 (figure 3) fait partie d'un bloc d'analyse d'images désigné dans son ensemble par la référence 60. Ce bloc comporte des montants verticaux 62 reliés au bâti du dispositif et servant au maintien de l'objectif 32 dans une position non réglable. Le circuit intégré photosensible 36 est porté par un élément 64 propre à coulisser verticalement entre les montants 62 précités pour assurer la mise au point de l'image formée sur la surface photosensible 34 du circuit intégré 36. Le déplacement vertical de l'élément 64 est assuré par un excentrique 66 entraîné par un moteur 68 logé entre les montants 62, l'élément 64 étant soumis à l'action de ressorts de traction 70.

On se réfère maintenant à la figure 4 sur laquelle seulement cinq des huit cellules d'analyse 10 ont été représentées et sur laquelle l'organe rotatif 40 n'a pas été représenté, pour simplifier le dessin.

Chacune des cellules 10 est reliée par l'une de ses entrées (celle correspondant à l'embout 18) au flacon correspondant 50 par l'intermédiaire d'une conduite 72 sur laquelle est intercalée l'électrovanne 58 correspondante. Ainsi, chacune des cellules 10 peut être alimentée par un sérum réactif particulier lorsque l'électrovanne 58 correspondante est dans sa position ouverte.

Les autres entrées des cellules 10 (celles correspondant aux embouts 16) sont reliées par une conduite commune 74 à un réceptacle ou bac de dilution 76 propre à recueillir l'échantillon à analyser ainsi qu'un diluant. La conduite 74 aboutit à une jonction 77 d'où partent différentes conduites 78 menant respectivement aux embouts d'entrée 16 des cellules 10.

Les sorties des cellules 10 (correspondant aux embouts de sortie 20) sont reliées chacune, par l'intermédiaire de conduites respectives 80, à une conduite commune 82. Cette dernière est reliée à une chambre à déchets 84 qui est elle-même reliée à une source de dépression 86 et à une source de haute pression 102.

Le fond du bac de dilution 76 est relié non seulement à la conduite commune 74 précitée mais également à une conduite d'évacuation 88 qui aboutit directement à la chambre à déchets 84. Une électrovanne 90 est montée en série sur les conduites 74 et 88 pour permettre au contenu du bac 76 d'être dirigé soit vers les différentes cellules 10 par la conduite commune 74, soit vers la chambre à déchets 84, le contenu du bac de dilution étant aspiré, dans chaque cas, par l'intermédiaire de la source 86.

L'application d'une pression ou d'une dépression (vide) à la chambre à déchets 84 est contrôlée par une électrovanne 92.

Une électrovanne 94 est en outre montée en série sur la conduite commune 82. Le contenu de la chambre à déchets 84 peut être vidé par l'intermédiaire d'une conduite d'évacuation 96 sur laquelle est montée une électrovanne 98.

La source de vide 86 permet d'alimenter un circuit vide ou basse pression pour réaliser le transfert des liquides par aspiration, que ce soit le transfert de l'échantillon dilué du bac 76, ou le transfert des différents sérums réactifs à partir de leurs flacons 50 respectifs. La source de vide 86 est obtenue par un groupe motocompresseur 100 qui crée également la source de pression 102 (figure 4). Cette source de pression alimente un circuit haute pression dont la fonction sera expliquée plus loin.

Le dispositif automatisé, tel que représenté à la figure 4, comprend en outre une aiguille de prélèvement 104 à déplacements verticaux et horizontaux, propre à aspirer une quantité calibrée d'un échantillon sanguin dans un tube 106 et à refouler ensuite cet échantillon dans le bac de dilution 76.

L'aiguille de prélèvement 104 est déplaçable verticalement par rapport à un bloc porte-aiguille 108, entre une position basse et une position haute, et cela sous l'action d'un vérin 110. Le bloc porte-aiguille 108 est déplaçable horizontalement sous l'action d'un vérin 112 entre une position de prélèvement et une position de refoulement. Dans la position de prélèvement (figure 4), l'aiguille 104 est amenée au-dessus du tube 106 et descendue en position basse pour le prélèvement de l'échantillon. Dans la position de refoulement, l'aiguille est amenée au-dessus du bac de dilution 76 et descendue en position basse, pour évacuer l'échantillon dans le bac 76.

Les vérins 110 et 112 sont des vérins pneumatiques à double effet alimentés en air comprimé par la source haute pression 102.

Le corps du vérin 110 est fixé verticalement au bloc porte- aiguille 108 et l'extrémité de sa tige est fixée à l'extrémité supérieure de l'aiguille de prélèvement 104 par l'intermédiaire d'un organe de liaison 114. L'aiguille 104 coulisse verticalement dans un passage cylindrique 116 ménagé dans le bloc porte-aiguille 108.

Le vérin 112 est un vérin pneumatique double effet piloté en pression par la source haute pression 102. Le corps du vérin 112 est fixé au bâti, suivant une implantation horizontale, et l'extrémité de sa tige est fixée au bloc porte-aiguille 108.

La source haute pression 102 alimente, par l'intermédiaire d'un régulateur de pression 118, un circuit haute pression alimentant les vérins 110 et 112.

Le vérin 110 est relié par des conduites 120 et 122 à une vanne à tiroir 124 pilotée par un actionneur 126 couplé à une électrovanne 128 actionnée par une commande électrique 130.

De façon correspondante, le vérin 112 est relié, par deux conduites 130 et 132, à une vanne à tiroir 134, pilotée par un actionneur 136, celui-ci étant couplé à une électrovanne 138 reliée à une commande électrique 140.

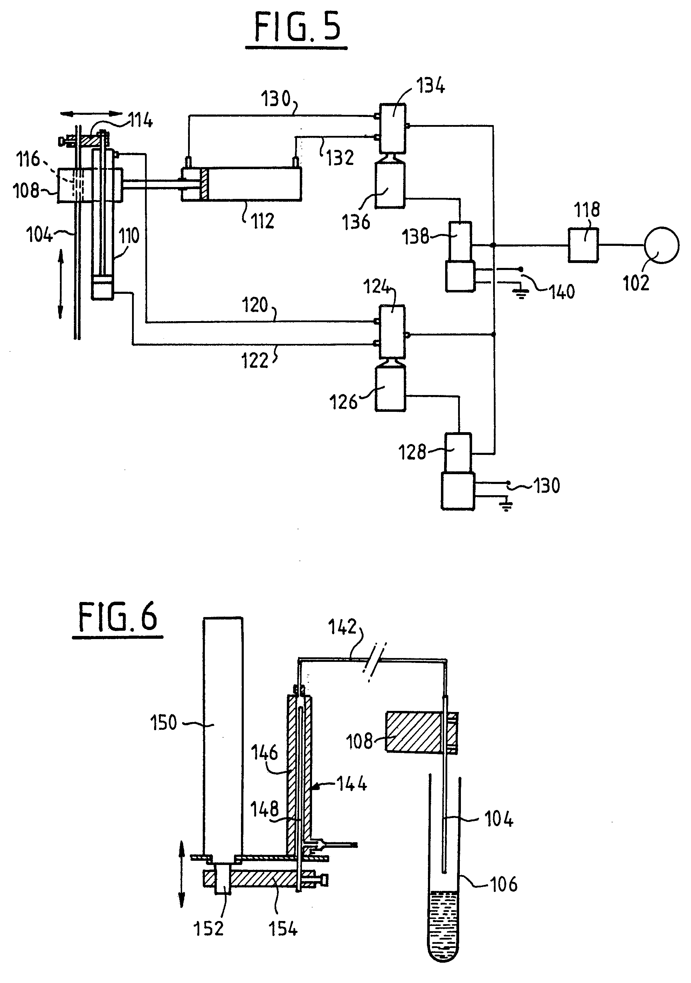

Le circuit de la figure 5 est opératoire pour permettre d'amener l'aiguille 104 au-dessus du tube 106, faire descendre cette aiguille dans le tube 106 pour permettre le prélèvement de l'échantillon, faire ensuite remonter l'aiguille dans le bloc 108, déplacer ensuite le bloc 108 pour l'amener au-dessus du bac 76 et faire descendre l'aiguille dans le bloc 108 en vue de refouler l'échantillon de sang prélevé auparavant.

L'aiguille de prélèvement 104 est reliée, par l'intermédiaire d'une conduite souple 142, à une seringue de prélèvement 144 propre à réaliser l'aspiration de l'échantillon dans le tube 106 et l'évacuation de cet échantillon par refoulement dans le bac de dilution 76 (figure 4).

La seringue de prélèvement 144 (figure 6) comprend un corps cylindrique creux 146 fixé verticalement sur le bâti du dispositif et ménageant un passage axial pour une tige 148 formant piston, ce passage axial étant relié, par son extrémité supérieure, à la conduite 142.

La tige 148 est propre à se déplacer verticalement dans le passage axial du corps 146 sous l'action d'un vérin pneumatique 150, à double effet, piloté également par la source haute pression 102. La tige 152 du vérin 150 est reliée, par l'intermédiaire d'un organe de liaison 154, à la partie inférieure de la tige 148. Ainsi, lorsque la tige 152 du verin 150 est déployée, la seringue 144 est opératoire pour prélever, par aspiration, une quantité calibrée de l'échantillon dans le tube 106. Au contraire, lorsque la tige 152 du vérin 150 est rétractée, la seringue 144 est opératoire pour refouler dans le bac 76 la quantité calibrée d'échantillon qui a été prélevée auparavant.

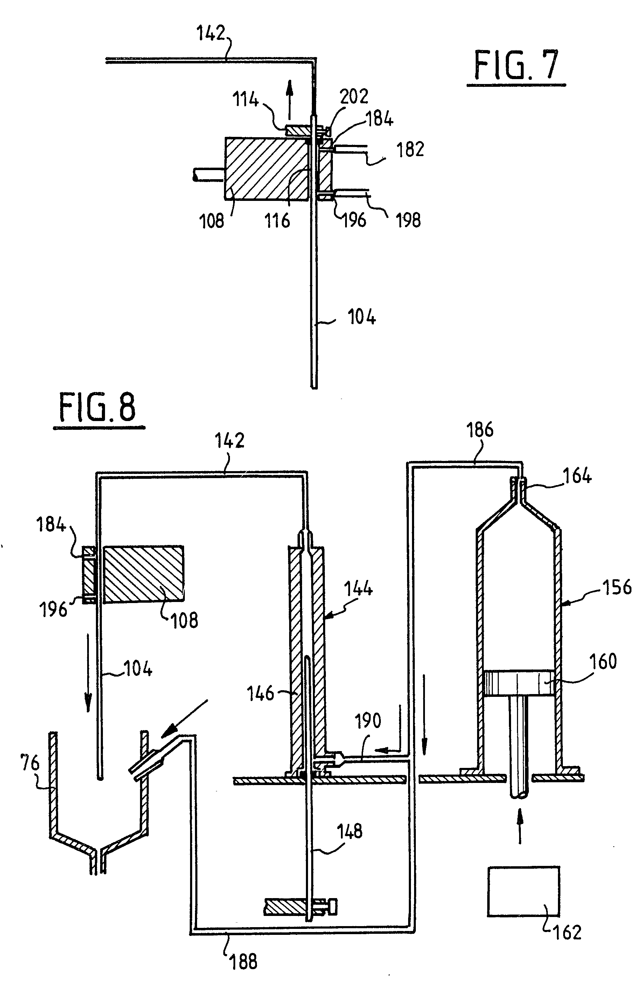

Le bloc porte-aiguille 108 comprend (figures 4 et 7) des moyens propres à rincer extérieurement l'aiguille de prélèvement 104 lors de son déplacement vertical ascendant qui suit immédiatement l'opération de prélèvement. Au cours de la remontée de l'aiguille 104, le passage 116 est alimenté en un diluant approprié, par exemple du sérum physiologique, par l'intermédiaire d'un distributeur ou dispensateur de diluant 156 (figure 4). Le dispensateur 156 comprend un cylindre creux 158 (figures 4 et 8) dans lequel se déplace un piston 160 actionné par un vérin pneumatique double effet représenté schématiquement en 162 sur la figure 4.

Le vérin 162 d'actionnement du dispensateur 156 et le vérin 150 d'actionnement de la seringue de prélèvement 144 sont pilotés à partir de la source haute pression 102.

Le cylindre 158 est muni d'un orifice d'entrée/sortie 164 relié par une conduite d'entrée 166 à une réserve de diluant 168 et à une réserve de détergent 170 respectivement par des conduites 172 et 174 débouchant dans la conduite 166. Une électrovanne 176 couplée aux conduites 172 et 174 permet d'alimenter à volonté le dispensateur 156 en diluant ou en détergent.

A partir de l'orifice 164 du dispensateur 156 s'étend également une conduite de sortie 178 qui est propre à alimenter le bac de dilution 76, la seringue de prélèvement 144 et le bloc porte-aiguille 108. Une électrovanne 180 est montée sur les conduites 166 et 178 immédiatement en aval de l'orifice 164. Cette électrovanne permet d'assurer le passage du diluant ou du détergent dans l'une quelconque des deux conduites 166 et 178 tandis que le passage dans l'autre conduite est interrompu. Le passage dans la conduite de sortie 178 étant interrompu, le piston 160 du dispensateur 156 est déplacé de manière à permettre le remplissage de ce dispensateur en diluant ou en détergent. Lorsque le dispensateur est ainsi rempli, l'électrovanne 180 peut être commutée de manière à obturer le passage à travers la conduite d'entrée 166. Lorsqu'ensuite le piston 160 est déplacé en direction de l'orifice 164, le diluant ou le détergent contenu dans le dispensateur peut être refoulé à travers la conduite de sortie 178. La conduite 178 se divise en deux branches : une branche 182 reliée à un embout d'entrée 184 du bloc porte-aiguille 108, et une branche 186 qui se divise elle-même en deux branches 188 et 190. Une électrovanne 192 est montée sur les conduites 182 et 186 pour envoyer le diluant ou le détergent soit vers le porte - aiguille 108, soit vers le bac 76 et la seringue 144.

Une autre électrovanne 194 est prévue sur la conduite 190, si bien que le liquide envoyé dans la conduite 186 permet, soit d'alimenter uniquement le bac 76, soit d'alimenter simultanément le bac 76 et la seringue de prélèvement 144.

L'embout d'entrée 184 du bloc porte-aiguille 108 (figure 7) débouche dans la partie supérieure du passage cylindrique 116. A sa partie inférieure, ce passage cylindrique est en communication avec un embout de sortie 196 qui est relié à la chambre à déchets 84 par l'intermédiaire d'une conduite 198 sur laquelle est montée une électrovanne 100 (figure 4).

Le passage 116 du bloc porte-aiguille 108 est muni, à sa partie supérieure, d'un joint torique 202 (figure 7) qui assure le coulissement étanche de l'aiguille de prélèvement 104 à travers le bloc porte-aiguille.

Lorsque le dispensateur 156 est opératoire pour envoyer un liquide (diluant ou détergent) vers le bloc porte-aiguille 108 pour assurer le rinçage de l'aiguille 104, ce liquide quitte le bloc porte-aiguille 108 par la conduite 198 et est évacué vers la chambre à déchets 84, la vanne 200 étant en position ouverte.

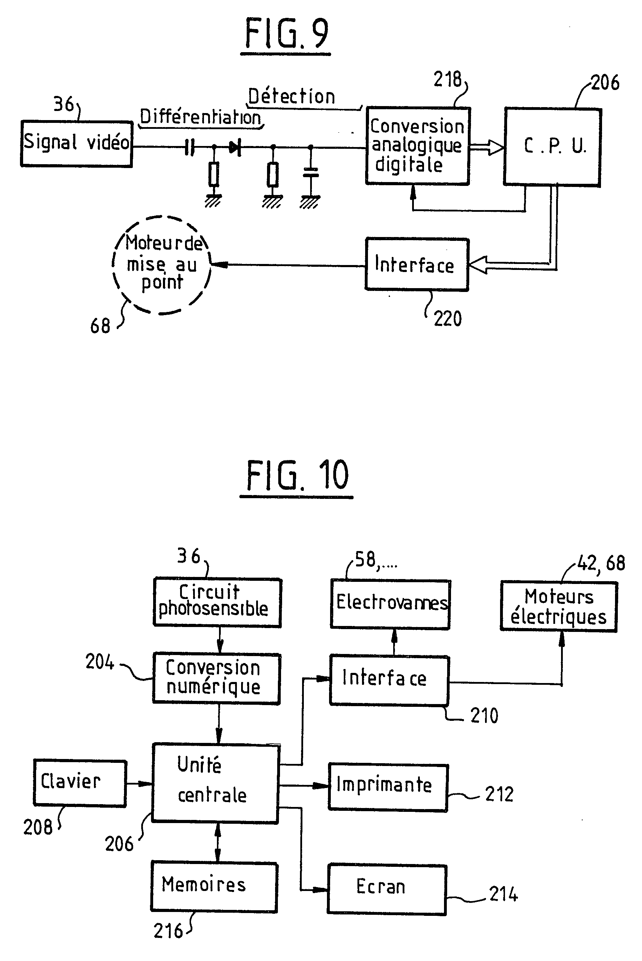

Le dispositif automatisé comprend en outre une partie électronique représentée schématiquement sur la figure 10.

Les circuits photosensibles 36 sont associés à des interfaces 204 pour transformer les signaux électriques analogiques émis par les circuits 36 en signaux numériques qui sont appliqués à une unité centrale 206. Cette unité centrale peut être constituée, par exemple, par un microprocesseur du type 68000 MOTOROLA.

L'unité centrale 206 est reliée, en entrée, à un clavier de commande 208 et, en sortie, à une interface 210, à une imprimante 212, et à un écran 214.

Par ailleurs, l'unité centrale 206 est couplée à un ensemble de mémoires 216.

L'interface 210 est opératoire pour piloter les différentes électrovannes du dispositif, c'est-à-dire aussi bien celles du circuit de circulation de fluide représenté à la figure 4 que celles du circuit haute pression pilotant les quatre vérins pneumatiques.

Cette interface pilote également les moteurs électriques du dispositif, à savoir le moteur électrique 42 de l'organe rotatif 40, et le moteur électrique 68 du bloc d'analyse d'image 60 (figure 3).

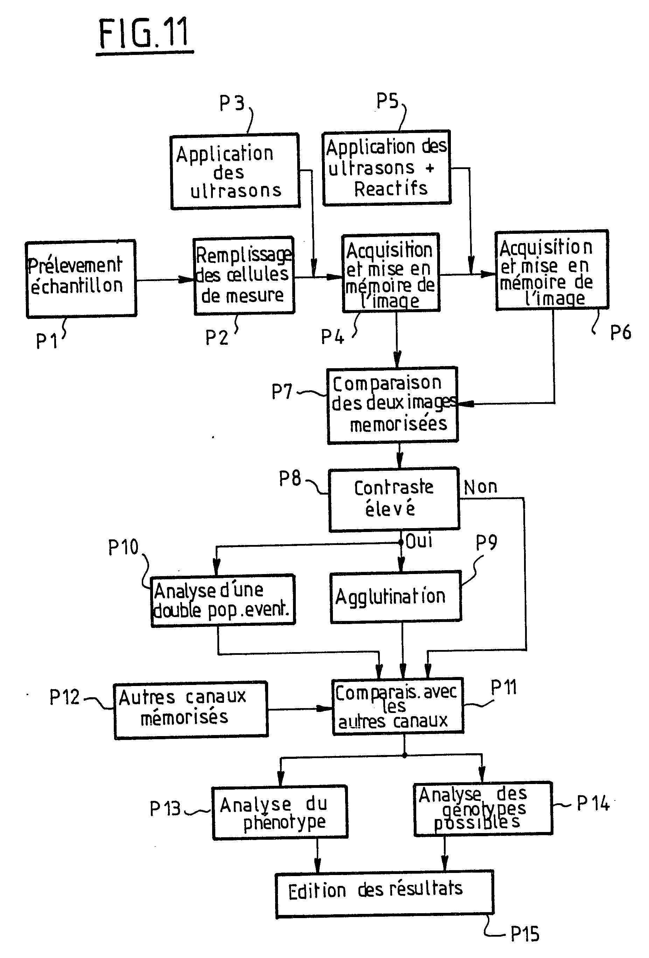

On décrira maintenant le fonctionnement du dispositif en référence aux différentes figures illustrant la structure du dispositif et en référence à la figure 11 montrant l'organigramme de fonctionnement, les différentes phases de fonctionnement étant désignées par les références P1, P2, etc.

Dans la position de départ, le bloc porte-aiguille 108 est situé au-dessus de l'emplacement du tube 106, l'aiguille de prélèvement 104 étant en position basse. On présente alors le tube 106 et on déclenche le cycle de fonctionnement en appuyant sur une commande appropriée.

On actionne le vérin 150 (figure 6) de commande de la seringue de prélèvement 144 de manière à faire sortir la tige 152 du vérin et à aspirer une quantité de sang calibrée par le déplacement de la tige 148 de la seringue 144.

Ensuite, l'aiguille de prélèvement 104 est déplacée de sa position basse à sa position haute par actionnement du vérin 110. Au cours de la remontée de l'aiguille 104 dans le bloc porte-aiguille 108, cette aiguille est rincée par du diluant envoyé dans le bloc porte-aiguille 108 par le dispensateur 156. Pour cela, la vanne 180 libère le passage de la conduite 178, la vanne 192 libère le passage de la conduite 182 et la vanne 200 libère le passage de la conduite 198. Le diluant utilisé pour le rinçage est envoyé ainsi directement vers la chambre à déchets 84.

Cette première phase de fonctionnement, ou phase P1, constitue la phase de prélèvement de l'échantillon.

Dans la phase de fonctionnement suivante, l'aiguille 104 étant en position haute, le bloc porte-aiguille 108 est déplacé, sous l'action du vérin 112, de manière à positionner l'aiguille 104 au-dessus du bac de dilution 76. L'aiguille 104 est alors descendue, sous l'action du vérin 110, de manière à pénétrer dans le bac de dilution 76 (figure 8). Le piston 160 du dispensateur 156 est actionné par le vérin 162 pour envoyer du diluant dans la branche 186 pour alimenter à la fois la seringue de prélèvement 144 et le bac de dilution 76. Pour cela, les électrovannes 192 et 194 (figure 4) libèrent respectivement le passage à travers les conduites 186 et 190. Au cours de cette opération, le bac de dilution 76 reçoit, d'une part l'échantillon de sang et du diluant par l'intermédiaire de l'aiguille 104 et, d'autre part, du diluant par l'intermédiaire de la conduite 188 qui débouche latéralement dans le bac 76.

Ensuite, la dilution (mélange échantillon et diluant) contenue dans le bac de dilution 76 est répartie dans les différentes cellules 10 grâce à la source de vide 86 du groupe motocompresseur 100 (figure 4). Pour permettre cette aspiration, l'électrovanne 90 libère le passage à travers la conduite 74 et la vanne 94 libère également le passage à travers la conduite 82. Dans cette deuxième phase, ou phase P2, on remplit les cellules de mesure 10 uniquement par la dilution, les électrovannes 58 bloquant le passage à travers les différentes conduites 72. Les cellules de mesure 10 reçoivent ainsi chacune une partie de la dilution initialement contenue dans le bac 76, sans encore recevoir de sérum réactif.

Au cours de la phase suivante, ou phase P3, on applique des ultrasons aux cellules 10 en appliquant un signal aux sources à ultrasons 24, de manière à provoquer l'agitation des cellules 10.

Ensuite, les cellules 10 défilent une par une, par rotation de l'organe rotatif 40, devant le bloc d'analyse d'image 60 (figure 3). L'image recueillie sur la surface photosensible 34 (figure 1) est acquise et mise en mémoire (phase P4) afin de servir de référence de niveau de lumière pour l'analyse ultérieure de la réaction d'agglutination.

Compte tenu de la faible profondeur de champ de l'objectif 32 du bloc d'analyse d'image 60, on corrige la mise au point au moyen du circuit représenté à la figure 9. Le signal vidéo en provenance du circuit intégré photosensible 36 est analysé et converti en données numériques par un convertisseur 218 et stocké en mémoire par l'unité centrale 206. L'unité centrale 206 pilote le moteur de mise au point 68 du bloc d'analyse d'image 60 par l'intermédiaire d'une interface 220. La position de l'objectif est réglée de manière que, après différenciation du signal, on détecte un signal maximal.

Après cette première opération de mise en mémoire, on vide le contenu des cellules 10 et on les rince, le cas échéant, par du diluant.

Ensuite, on effectue un deuxième remplissage des cellules de mesure en procédant comme déjà indiqué, mais en commutant les différentes électrovannes 58 de manière à aspirer en même temps une quantité donnée des différents sérums réactifs contenus dans les flacons 50. Chacune des cellules d'analyse reçoit ainsi une fraction de la dilution avec un sérum réactif spécifique.

Ensuite (phase P5), on applique à nouveau des ultrasons en se plaçant dans les mêmes conditions que dans la phase P3 en ce qui concerne la fréquence du signal appliqué aux sources à ultrasons.

Pour améliorer le rendement de la réaction d'agglutination, dans le cas où celle-ci est positive, on fait décroître l'amplitude du signal de façon linéaire pendant un temps très long devant la fréquence du signal. La potentialisation de la réaction ainsi obtenue permet de diminuer le risque de fausse interprétation et également de diminuer le temps nécessaire à l'analyse.

Au cours de la phase suivante, ou phase P6, on effectue une nouvelle opération d'acquisition et de mise en mémoire de l'image, et cela dans les mêmes conditions que pour la phase P4. L'image mise en mémoire est stockée après la phase de mise au point automatique. Chacune des cellules donne ainsi une image qui est le résultat d'une réaction positive ou négative.

Le dispositif réalise ensuite, de façon automatique, le rinçage des différents circuits après chaque cycle d'analyse.

A l'aide du dispensateur 156, on envoie une quantité de diluant ou de détergent, le cas échéant, dans le bac de dilution 76 et ce diluant est ensuite envoyé dans les cellules d'analyse 10 qui chassent ainsi l'échantillon qui s'y trouvait, vers la chambre à déchets 84.

Cette chambre est ensuite vidée par la conduite d'évacuation 96 sous l'action de la pression de la source haute pression 102 du groupe compresseur 100 (figure 4).

Le dispositif compare ensuite, au cours d'une phase P7, les deux images mémorisées au cours des phases respectives P4 et P6. Pour chaque cellule d'analyse, donc pour chaque sérum réactif, la mémoire du dispositif contient l'enregistrement de deux images : une image enregistrée avec la dilution sans sérum réactif, l'autre enregistrée avec la dilution et le sérum réactif.

Chaque adresse de l'espace mémoire correspond à une zone élémentaire de la surface de l'image considérée. En outre, le contenu de la mémoire de chaque adresse correspond au niveau de lumière transmise à travers la cellule d'analyse.

Pour effectuer la comparaison des deux images, on soustrait adresse par adresse le contenu de l'espace mémoire de la première image du contenu de l'espace mémoire de la deuxième image. On obtient ainsi, dans un troisième espace mémoire, une image de synthèse mettant en évidence les zones fortement contrastées quand la réaction d'agglutination a été positive (P9). Même dans le cas où on obtient un contraste élevé, on peut analyser une double population éventuelle (P10), c'est-à-dire un groupe d'hématies ayant eu une réaction positive et l'autre pas.

Dans le cas contraire où on ne constate aucun contraste élevé entre les deux images mémorisées, on est en présence d'une réaction d'agglutination négative.

Dans tous les cas, on effectue (phase P11) une comparaison avec les autres canaux mémorisés au préalable (phase P12).

De cette comparaison, on en déduit l'analyse du phénotype (phase P13) et l'analyse des génotypes possibles (phase P14). Les résultats obtenus sont édités (phase P15), la synthèse des résultats étant réalisée automatiquement par le microprocesseur de l'unité centrale et les résultats étant délivrés par l'imprimante 212.

**Revendications**

1.- Dispositif pour la détermination du groupe sanguin d'un échantillon, comprenant au moins une cellule de mesure propre à recueillir une fraction de l'échantillon et une fraction d'un sérum réactif, des moyens d'agitation de la cellule pour provoquer une éventuelle réaction d'agglutination entre l'échantillon et le sérum réactif, et des moyens de détection de cette réaction d'agglutination, caractérisé en ce que les moyens d'agitation comprennent une source à ultrasons (24) fixée sur la cellule de mesure (10).

2.- Dispositif selon la revendication 1, caractérisé en ce que la source à ultrasons (24) est à basse fréquence, de préférence de 10 à 100 kHz, en particulier de 50 kHz environ.

3.- Dispositif selon l'une des revendications 1 et 2, caractérisé en ce que la cellule de mesure (10) ménage une cavité interne et comporte une double entrée, à savoir une entrée (16) pour emplir cette cavité avec l'échantillon, de préférence dilué, et une entrée (18) pour emplir cette cavité avec le sérum réactif, et une sortie (20) pour évacuer le contenu de la cavité.

4.- Dispositif selon l'une des revendications 1 à 3, caractérisé en ce qu'il comprend un organe support (40) monté à rotation autour d'un axe (X-X) et propre à supporter une pluralité de cellules de mesure (10) et un nombre correspondant de flacons (50) dont chacun d'eux contient un sérum réactif différent et est associé à l'une des cellules de mesure (10), l'organe support (40) étant propre à faire défiler les cellules de mesure (10) une par une devant les moyens de détection (60).

5.- Dispositif selon les revendications 3 et 4, caractérisé en ce que l'une des entrées de chaque cellule est reliée, par l'intermédiaire d'une conduite (24) et d'une électrovanne (58), au flacon (50) de sérum réactif correspondant, en ce que les autres entrées des cellules sont reliées par une conduite commune (74) à un bac de dilution (76) propre à recueillir l'échantillon et un diluant, et en ce que les sorties respectives des cellules sont reliées par une conduite commune (82) à une chambre à déchets (84).

6.- Dispositif selon la revendication 5, caractérisé en ce qu'il comprend une aiguille de prélèvement (104) à déplacements verticaux et horizontaux, propre à aspirer un échantillon sanguin dans un réceptacle approprié, tel qu'un tube (106), et à refouler ensuite cet échantillon dans le bac de dilution (76).

7.- Dispositif selon la revendication 6, caractérisé en ce que l'aiguille de prélèvement (104) est déplaçable verticalement, sous l'action d'un vérin (110) par rapport à un bloc porte-aiguille (108) entre une position basse et une position haute, en ce que ce bloc porte-aiguille (108) est déplaçable horizontalement, sous l'action d'un vérin (112), entre une position de prélèvement où l'aiguille est amenée au-dessus du réceptacle d'échantillon (106) et une position de refoulement où l'aiguille est amenée au-dessus du bac de dilution (76) pour refouler l'échantillon dans ce bac de dilution.

8.- Dispositif selon la revendication 7, caractérisé en ce que l'aiguille de prélèvement (104) est reliée à une seringue de prélèvement (144) propre à prélever l'échantillon par aspiration dans le réceptacle à échantillon (106) et à évacuer cet échantillon par refoulement dans le bac de dilution (76).

9.- Dispositif selon l'une des revendications 7 et 8, caractérisé en ce que le bloc porte-aiguille (108) comprend un passage cylindrique (116) vertical pour le déplacement de l'aiguille et des moyens (156) pour alimenter ce passage en diluant, lors de la remontée de l'aiguille de prélèvement (104) de manière à rincer l'extérieur de cette aiguille.

10.- Dispositif selon l'une des revendications 8 et 9, caractérisé en ce qu'il comprend un dispensateur (156) propre à être alimenté en un fluide, tel qu'un diluant ou un détergent, et à envoyer ce fluide dans le bac de dilution (76) et éventuellement aussi dans la seringue de prélèvement (144), lorsque l'aiguille de prélèvement (104) est dans la position d'évacuation au-dessus du bac de dilution (76).

11.- Dispositif selon l'une des revendications 9 et 10, caractérisé en ce que le dispensateur (156) est relié également au passage cylindrique (116) du bloc porte-aiguille (108) pour l'alimenter en diluant en vue du rinçage de l'aiguille de prélèvement.

12.- Dispositif selon la revendication 11, caractérisé en ce que le dispensateur (156) comporte un cylindre creux (158) dans lequel se déplace un piston (160) actionné par un vérin (162), ce cylindre étant muni d'un orifice d'entrée-sortie (164) relié par une conduite d'entrée (166) à une réserve de diluant (168) et à une réserve de détergent (170) et relié en outre, par une conduite de sortie (178), au bac de dilution (76), à la seringue de prélèvement (144) et au bloc porte-aiguille (108), une électrovanne (180) étant prévue pour assurer le passage dans l'une quelconque des deux conduites (166) et (178), tandis que le passage dans l'autre est interrompu.

13.- Dispositif selon la revendication 12, caractérisé en ce que la conduite de sortie (178) se divise en deux branches : une branche (182) alimentant le bloc porte-aiguille (108) et une branche (186) alimentant le bac de dilution (76) et la seringue de prélèvement (144), une électrovanne (194) étant prévue pour rendre opératoire l'une quelconque des deux branches, la deuxième branche (186) alimentant en permanence le bac de dilution (76) et comportant une dérivation (190) propre à alimenter la seringue de prélèvement (144) et comportant une électrovanne (194).

14.- Dispositif selon l'une des revendications 1 à 3, caractérisé en ce que la cellule de mesure (10) est réalisée en verre transparent, en ce que les moyens de détection comprennent une source lumineuse (28) propre à envoyer un rayon lumineux (30) à travers la cellule, un objectif (32) propre à recueillir le rayon lumineux transmis à travers la cellule et à former, sur une surface photosensible (34), une image représentative de la réaction d'agglutination.

15.- Dispositif selon la revendication 14, caractérisé en ce que la surface photosensible (34) fait partie d'un circuit intégré photosensible (36) propre à émettre des signaux de sortie (38) représentatifs d'une réaction d'agglutination positive ou négative.

0300894

FIG.1

FIG.2

FIG.3

0300894

FIG. 4

## FIG.5

## FIG.6

0300894

FIG. 7

FIG.8

0300894

## FIG.9

## FIG. 10

0300894

# FIG.11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 411 518 (P.M. MESEROL et al.)<br>* Abrégé; colonne 5, lignes 6-46;<br>colonne 7, lignes 7-10; colonne 8,<br>lignes 28-65; figures 8,10,11 * | 1,14,15 | G 01 N 35/00<br>G 01 N 21/25<br>G 01 N 33/80 |
| Y | PATENT ABSTRACTS OF JAPAN, vol. 7, no.<br>127 (P.201)[1272], 3 juin 1983, page 27<br>P 201; & JP-A-58 44 335 (MITSUBISHI<br>JUKOGYO K.K.) 15-03-1983<br>* En entier * | 1,14,15 | |
| A | US-A-3 819 271 (H. BEUG et al.)<br>* Colonne 2, lignes 9-61; figures 1-3 * | 3,4 | |
| A | US-A-3 582 222 (R. HOBLIK)<br>* Colonne 1, ligne 53 - colonne 2,<br>ligne 7; figures 1,2 * | 3 | |
| A | FR-A-2 250 109 (COMMISSARIAT A<br>L'ENERGIE ATOMIQUE)<br>* Page 11, lignes 1-26; figures 1,2 * | 6,10,12 | |
| A | US-A-3 529 475 (G.E. LIGHTNER)<br>* Colonne 3, ligne 29 - colonne 4,<br>ligne 15; figures 1,2 * | 7 | |
| A | US-A-3 911 749 (R.J. HENDRY)<br>* Abrégé; figures 1-4 * | 9 | |
| A | DE-A-3 344 914 (KERNFORSCHUNGSANLAGE<br>JÜLICH) | | |
| A | DE-A-3 246 873 (OLYMPUS OPTICAL CO.) | | |

**DOMAINES TECHNIQUES RECHERCHES (Int. Cl.4)**

G 01 N

**Le présent rapport a été établi pour toutes les revendications**

| Lieu de la recherche | Date d'achèvement de la recherche | Examinateur |
|---|---|---|
| LA HAYE | 28-10-1988 | ANTHONY R.G. |